# FASCICULE DE BREVET EUROPEEN

(11) **EP 4 241 416 B1**
(45) Date de publication et mention de la délivrance du brevet: **09.04.2025**
(21) Numéro de dépôt: 21814831.0
(22) Date de dépôt: 03.11.2021
(51) Int. Cl.: H04L 9/08, H04L 9/32

(54) **PROCEDE DE DELEGATION D'ACCES A UNE CHAINE DE BLOCS**
VERFAHREN ZUR DELEGIERUNG DES ZUGRIFFS AUF EINE BLOCKCHAIN
METHOD FOR DELEGATING ACCESS TO A BLOCKCHAIN

(30) Priorité: 06.11.2020 FR 2011420
(43) Date de publication de la demande: 13.09.2023
(73) Titulaire: Orange, 92130 Issy-les-Moulineaux (FR)
(72) Inventeur: HATIN, Julien, 92326 CHÂTILLON CEDEX (FR); HEMERY, Baptiste, 92326 CHÂTILLON CEDEX (FR); BERTIN, Emmanuel, 92326 CHÂTILLON CEDEX (FR)
(86) Numéro de dépôt international: PCT/FR2021/051938
(87) Numéro de publication internationale: WO 2022/096824

(56) Documents cités:
- CN-A- 109 510 760
- REIS MIGUEL REIS EGÍDIO: "Blockchain-Enabled DPKI Framework", DISSERTATION SUBMITTED IN PARTIAL FULFILLMENT OF THE REQUIREMENTS FOR THE DEGREE OF MASTER OF SCIENCE IN COMPUTER SCIENCE AND INFORMATICS ENGINEERING, 1 September 2019 (2019-09-01), XP055816425, Retrieved from the Internet <URL:https://run.unl.pt/bitstream/10362/96660/1/Reis_2019.pdf> [retrieved on 20210622]
- DITTMANN GERO ET AL: "A Blockchain Proxy for Lightweight IoT Devices", 2019 CRYPTO VALLEY CONFERENCE ON BLOCKCHAIN TECHNOLOGY (CVCBT), IEEE, 24 June 2019 (2019-06-24), pages 82 - 85, XP033590955, DOI: 10.1109/CVCBT.2019.00015
- ÖZYILMAZ KAZIM RIFAT ET AL: "Work-in-progress: integrating low-power IoT devices to a blockchain-based infrastructure", 2017 INTERNATIONAL CONFERENCE ON EMBEDDED SOFTWARE (EMSOFT), ACM, 15 October 2017 (2017-10-15), pages 1 - 2, XP033269936, DOI: 10.1145/3125503.3125628

## Description

### 1. Domaine de l'invention

L'invention se rapporte au domaine général des réseaux de télécommunications, et plus précisément à la technologie des chaînes de blocs (en anglais « blockchain »).

### 2. Art Antérieur

On rappelle que « la technologie des chaînes de blocs est une technologie de stockage et de transmission d'informations sans organe de contrôle. Techniquement, il s'agit d'une base de données distribuée dont les informations envoyées par les utilisateurs et les liens internes à la base sont vérifiés et groupés à intervalles de temps réguliers en blocs, l'ensemble étant sécurisé par cryptographie, et formant ainsi une chaîne. Par extension, une chaîne de blocs est une base de données distribuée qui gère une liste d'enregistrements protégés contre la falsification ou la modification par les nœuds de stockage ; c'est donc un registre distribué et sécurisé de toutes les transactions effectuées depuis le démarrage du système réparti ». Les chaînes de blocs sont caractérisées en outre en ce que leurs contenus ne peuvent pas être modifiés ou supprimés : une information publiée dans une chaîne de blocs le reste pour toujours. Nous désignons par information « publiée » dans une chaîne de blocs, une information enregistrée ou sauvegardée dans celle-ci.

Une problématique qui se pose dans le cadre de la technologie des chaînes de blocs est l'accès à celle-ci et plus précisément la réalisation d'opérations au sein d'une chaîne de blocs comme par exemple le déploiement ou l'exécution d'un « smart contract ». Un « smart-contract » est par exemple une version digitale d'un contrat traditionnel, c'est à dire un programme informatique qui permet de faciliter, exécuter et imposer la négociation ou l'exécution d'un accord à l'aide de la technologie des chaînes de blocs. L'un des principaux objectifs d'un « smart-contract » est de permettre à deux parties anonymes de réaliser des transactions entre elles sans avoir besoin d'un intermédiaire.

Pour interagir avec une chaîne de blocs, un utilisateur doit détenir un ensemble d'éléments tels que des clefs cryptographiques pour lui permettre de s'authentifier auprès de la chaîne de blocs. Tout cela nécessite un processus d'enrôlement pour chaque utilisateur de la chaîne de blocs qui peut être lourd et fastidieux. Ce mode de fonctionnement n'est de plus pas adapté à une entreprise qui souhaiterait réutiliser son infrastructure interne à clefs publiques, infrastructure qui permet de lier des clefs publiques aux identités des collaborateurs de l'entreprise, pour permettre à certains collaborateurs d'accéder à une chaîne de blocs. De même, ce mode de fonctionnement ne permet pas de faciliter l'accès à la chaîne de blocs via par exemple une solution d'authentification unique de type SSO (Single sign-On). En outre, certains petits acteurs peuvent souhaiter déléguer la gestion de leurs opérations au sein d'une chaîne de blocs à des prestataires spécialisés du domaine pour des raisons de praticité. Il existe donc un besoin de délégation des droits d'accès à une chaîne de blocs.

### 3. Exposé de l'invention

L'invention vient améliorer l'état de la technique et propose un procédé de délégation d'accès à au moins une première chaîne de blocs, mis en œuvre par un dispositif de délégation d'accès, le procédé étant caractérisé en ce qu'il comprend :
- une étape de réception, d'une requête d'exécution en provenance d'un terminal, ladite requête comprenant au moins un identifiant d'un utilisateur et au moins une commande d'exécution d'une action au sein de ladite au moins une première chaîne de blocs, ladite commande étant chiffrée via au moins une clef de chiffrement appartenant audit utilisateur ;
- une étape d'obtention, en fonction dudit au moins un identifiant dudit utilisateur reçu, d'au moins une clef de déchiffrement dudit utilisateur permettant le déchiffrement de ladite commande d'exécution ;
- une étape de déchiffrement de ladite commande d'exécution ;
- une étape d'émission, à destination de ladite au moins une première chaîne de blocs, d'une demande d'exécution de ladite commande d'exécution déchiffrée via ladite au moins une clef de déchiffrement.

Ainsi, l'invention propose un procédé permettant de déléguer l'accès et l'exécution d'une action au sein d'une chaîne de blocs. La présente demande est présentée dans le contexte d'une « chaîne de blocs » en anglais « blockchain » mais l'expression « chaîne de blocs » est à comprendre comme couvrant tout type de DLT (en anglais Distributed Ledger Technology) apte à héberger des applications décentralisées connues sous le nom de DApp

(Decentralized Applications en anglais) dont les chaînes de blocs à proprement parler constituent un élément particulier.

D'un point de vue pratique, l'invention offre un nouveau mécanisme dans lequel, lorsqu'un utilisateur souhaite réaliser une opération au niveau d'une chaîne de blocs, celui-ci va émettre auprès d'un tiers tel qu'un opérateur de confiance, une demande d'exécution d'une action comprenant un ou plusieurs de ses identifiants et la commande d'exécution chiffrée de l'action via une clef de chiffrement lui appartenant. Le procédé de délégation d'accès opéré par le tiers va alors, grâce à l'identifiant reçu, obtenir une ou plusieurs clefs de déchiffrement appartenant à l'utilisateur. Lorsque la ou les clefs de déchiffrement permettent de déchiffrer la commande d'exécution, alors le procédé va émettre à destination de la chaîne de blocs la demande d'exécution de la commande d'exécution déchiffrée.

On entend par identifiant d'un utilisateur, une suite de caractères qui permet d'identifier de manière unique l'utilisateur tel qu'un numéro, une adresse de messagerie, un numéro de carte d'identité, un numéro d'abonné, etc.

On entend par clef de chiffrement (ou clef cryptographique) une clef qui permet de garantir la confidentialité d'une donnée via son codage. On entend par clef de déchiffrement (ou clef cryptographique) une clef qui permet de décoder une donnée codée via une clef de chiffrement.

Selon un mode de mise en œuvre particulier de l'invention, un procédé tel que décrit ci-dessus est caractérisé en ce que ladite au moins une clef de déchiffrement dudit utilisateur est obtenue depuis au moins une deuxième chaîne de blocs.

Ce mode de mise en œuvre permet d'obtenir depuis un registre distribué et sécurisé la ou les clefs de déchiffrements de l'utilisateur permettant l'exécution de la commande d'exécution qu'il souhaite effectuer au sein d'une chaîne de blocs. Concrètement, cela implique que l'utilisateur s'est préalablement enrôlé au sein de la chaîne de blocs via ses propres moyens ou grâce au tiers de confiance. Lors de cet enrôlement, sa ou ses clefs de déchiffrement ont été provisionnées par exemple dans un contrat intelligent géré par le tiers de confiance. A noter que les applications décentralisées comme par exemple les dApps du projet Ethereum constituent des contrats intelligents au sens de l'invention.

Selon un mode de mise en œuvre particulier de l'invention, un procédé tel que décrit ci-dessus est caractérisé en ce que ladite au moins une première chaîne de blocs correspond à ladite au moins une seconde chaîne de blocs.

Ce mode de mise en œuvre permet de considérer une seule et unique chaîne de blocs pour à la fois obtenir une ou plusieurs clefs de déchiffrement de l'utilisateur permettant l'exécution de la commande d'exécution et pour l'exécution de la commande d'exécution en tant que telle.

Avantageusement, ce mode de mise en œuvre peut permettre l'utilisation de couples de clefs de chiffrement / déchiffrement différents selon les chaînes de blocs, chaque chaîne de blocs pouvant héberger une clef de déchiffrement différente.

Selon un mode de mise en œuvre particulier de l'invention, un procédé tel que décrit ci-dessus est caractérisé en ce que l'étape de réception est précédée d'une étape d'authentification dudit utilisateur.

Ce mode de mise en œuvre permet d'éviter, par exemple, les attaques par déni de service et garantit l'accès aux services pour les utilisateurs légitimes.

Selon un mode de mise en œuvre particulier de l'invention, un procédé tel que décrit ci-dessus est caractérisé en ce que l'étape d'émission est précédée d'une étape de publication dans ladite au moins une première chaîne de blocs dudit au moins un identifiant dudit utilisateur et de ladite commande d'exécution déchiffrée et/ou de ladite commande d'exécution chiffrée.

Ce mode de mise en œuvre permet de stocker et de partager la commande d'exécution soumise et l'identité de celui qui a demandé son exécution. Ainsi, les actions réalisées par le procédé sont enregistrées et horodatées.

Selon un mode de mise en œuvre particulier de l'invention, un procédé tel que décrit ci-dessus est caractérisé en ce que la commande d'exécution déchiffrée est une commande de révocation de ladite au moins une clef de déchiffrement de ladite au moins une deuxième chaîne de blocs.

Ce mode de mise en œuvre permet de révoquer le droit d'un utilisateur à utiliser le service. En effet, si l'utilisateur ne dispose plus du droit d'utilisation de la clef de déchiffrement stockée dans la chaîne de blocs alors le procédé ne pourra pas obtenir la clef de déchiffrement permettant de déchiffrer la commande d'exécution pour une demande/requête d'exécution ultérieure. La demande d'exécution ultérieure ne pourra donc pas être émise. Cette révocation est réalisée via l'ajout dans la chaîne de blocs d'une information de validité associée à la clef de déchiffrement de l'utilisateur. Cette information de validité peut être un booléen, un caractère, une chaine de caractères, une date, ou tout autre information permettant de déterminer la validité de la clef de déchiffrement.

Selon un mode de mise en œuvre particulier de l'invention, un procédé tel que décrit ci-dessus est caractérisé en ce que la commande d'exécution déchiffrée est une commande de déploiement d'un contrat intelligent au sein de ladite au moins une première chaîne de blocs. Ce mode de mise en œuvre permet de déployer un nouveau contrat intelligent au niveau d'une chaîne de blocs. A noter que les applications décentralisées dApps du projet Ethereum constituent des contrats intelligents au sens de l'invention.

Selon un mode de mise en œuvre particulier de l'invention, un procédé tel que décrit ci-dessus est caractérisé en ce que la commande d'exécution déchiffrée est une commande d'exécution d'un contrat intelligent stocké dans ladite chaîne de blocs.

Ce mode de mise en œuvre permet, par exemple, à un utilisateur d'exécuter une application décentralisée ou une de ses fonctions.

L'invention concerne également un dispositif de délégation d'accès à au moins une première chaîne de blocs caractérisé en ce qu'il comprend :
- un module de réception, d'une requête d'exécution en provenance d'un terminal, ladite requête comprenant au moins un identifiant d'un utilisateur et au moins une commande d'exécution d'une action au sein de ladite au moins une première chaîne de blocs, ladite commande étant chiffrée via au moins une clef de chiffrement appartenant audit utilisateur ;
- un module d'obtention, en fonction dudit au moins un identifiant dudit utilisateur reçu, d'au moins une clef de déchiffrement dudit utilisateur permettant le déchiffrement de ladite commande d'exécution ;
- un module de déchiffrement de ladite commande d'exécution ;
- un module d'émission, à destination de ladite au moins une première chaîne de blocs, d'une demande d'exécution de ladite commande d'exécution déchiffrée via ladite au moins une clef de déchiffrement.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention concerne également un programme d'ordinateur comportant des instructions pour la mise en œuvre du procédé ci-dessus selon l'un quelconque des modes particuliers de réalisation décrits précédemment, lorsque ledit programme est exécuté par un processeur. Le procédé peut être mis en œuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif de délégation d'accès et ce programme d'ordinateur présentent des caractéristiques et avantages analogues à ceux décrits précédemment en relation avec le procédé de délégation d'accès.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 représente l'architecture matérielle d'un dispositif de délégation d'accès selon un mode particulier de réalisation ;
[Fig 2] La figure 2 représente sous forme d'organigramme les principales étapes d'un procédé de délégation d'accès conformes aux modes de réalisation de l'invention.

### 5. Description d'un mode de réalisation de l'invention

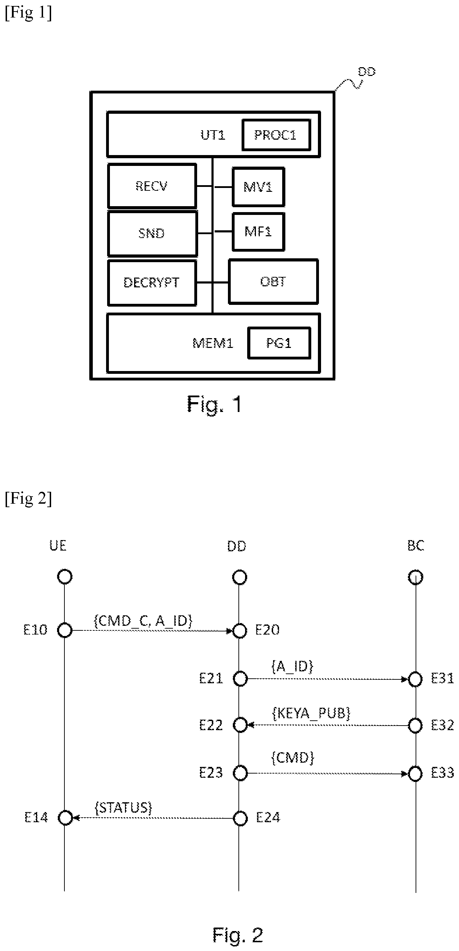

La figure 1 représente l'architecture matérielle d'un dispositif de contrôle de délégation d'accès DD conforme à l'invention. Dans le mode de réalisation décrit ici, ce dispositif a l'architecture matérielle d'un ordinateur. Il comprend notamment un processeur PROC1, une mémoire vive MV1, une mémoire morte MEM1 et une mémoire flash non volatile MF1. De tels moyens sont connus en soi et ne sont pas décrits plus en détail ici. La mémoire morte constitue un support d'enregistrement conforme à l'invention, lisible par le processeur PROC1 et sur lequel est enregistré ici un programme d'ordinateur PG1 conforme à l'invention, ce programme comportant des instructions pour mettre en œuvre les étapes du procédé de délégation d'accès tel que décrit précédemment, lorsque le programme est exécuté par le processeur PROC1.

A l'initialisation, les instructions de code du programme d'ordinateur PG1 sont par exemple chargées dans une mémoire avant d'être exécutées par le processeur PROC1. Le processeur PROC1 de l'unité de traitement UT1 met notamment en œuvre les étapes du procédé de délégation d'accès selon l'un quelconque des modes particuliers de réalisation décrits en relation avec la figure 2, selon les instructions du programme d'ordinateur PG1.

Le dispositif DD comprend également un module RECV adapté pour recevoir une requête d'exécution, en provenance d'un terminal d'un utilisateur, comprenant un identifiant de l'utilisateur et une commande d'exécution chiffrée d'une action à réaliser au sein d'une chaîne de blocs. Le dispositif DD comprend de plus un module d'obtention OBT apte à obtenir une clef de déchiffrement appartenant à l'utilisateur en fonction de l'identifiant de l'utilisateur reçu via le module RECV. Le dispositif DD comprend en outre un module de déchiffrement DECRYPT apte à décrypter la commande d'exécution chiffrée reçue via le module RECV. Le dispositif DD comprend également un module SND apte à émettre à destination d'une chaîne de blocs une demande d'exécution de la commande d'exécution reçue et déchiffrée via le module DECRYPT grâce à la clef de déchiffrement obtenue par le module OBT.

Selon un mode particulier de réalisation de l'invention, les modules RECV et SND peuvent être un seul et même module de communication.

Selon un mode particulier de réalisation de l'invention, le dispositif DD peut également comprendre un module de publication (non représenté) apte à publier dans une chaîne de blocs, la commande d'exécution déchiffrée et/ou chiffrée et l'identifiant de l'utilisateur.

Selon un mode particulier de réalisation de l'invention, le dispositif DD peut également comprendre un module d'authentification (non représenté) apte à authentifier l'utilisateur.

En référence à la figure 2, nous allons maintenant décrire les principales étapes E20, E21, E22, E23 et E24 d'un procédé de délégation d'accès conformes aux modes de réalisation de l'invention. La figure 2 est constituée d'un terminal UE, d'un dispositif de délégation d'accès DD qui exécute le procédé de délégation d'accès et d'une chaîne de blocs BC. Le terminal UE est par exemple un ordinateur, un serveur, un téléphone mobile, un objet connecté, ou tout autre terminal apte à émettre / recevoir des requêtes. Le dispositif de délégation d'accès DD est par exemple un ordinateur, un serveur, un téléphone mobile, un objet connecté, ou tout autre terminal apte à émettre / recevoir des requêtes. Nous supposerons que l'utilisateur Alice du terminal UE (ci-après Alice) a déjà été enregistrée dans la chaîne de blocs lors d'une phase d'inscription préalable, c'est-à-dire qu'une clef publique KEYA_PUB d'Alice est enregistrée dans la chaîne de blocs BC, par exemple dans un contrat intelligent (« smart contract »).

Selon un mode particulier de réalisation de l'invention, l'inscription est réalisée par le dispositif DD pour le compte d'Alice. Concrètement, Alice envoie une requête de demande d'enrôlement au dispositif DD qui comprend la clef publique KEYA_PUB d'Alice et un identifiant d'Alice (A_ID). Le Dispositif DD va, suite à la réception de la demande d'enrôlement, publier dans la chaîne de blocs BC, par exemple dans un contrat intelligent géré par le dispositif DD, l'identifiant et la clef publique d'Alice. Bien évidemment, le dispositif DD s'est déjà enregistré auprès de la chaîne de blocs BC lors d'une phase d'inscription préalable, c'est-à-dire que le dispositif DD dispose de clefs cryptographiques lui permettant d'interagir avec la chaîne de blocs BC (exécuter des opérations au sein de la BC).

Selon un mode particulier de réalisation de l'invention, le dispositif DD est un serveur d'une entreprise qui va permettre la centralisation des accès à une chaîne de blocs pour les salariés de l'entreprise.

Selon un mode particulier de réalisation de l'invention, l'enrôlement d'Alice est précédé d'une étape d'authentification d'Alice par le dispositif DD. Cette authentification peut par exemple se faire via un couple identifiant / mot de passe, un « cookie de session » ou tout autre moyen permettant au dispositif DD de s'assurer que la requête d'enrôlement est bien envoyée par Alice.

Au cours d'une étape E10, Alice utilise son terminal UE pour demander au dispositif DD d'exécuter en son nom une commande (CMD_C) au niveau de la chaîne de blocs BC. Concrètement, lors de cette étape E10, le terminal UE envoie une requête à destination du dispositif DD qui comprend au moins la commande d'Alice chiffrée (CMD_C) via une clef de chiffrement privée appartenant à Alice (KEYA_PRIV) et un identifiant d'Alice (A_ID). A noter que l'envoi de la requête peut par exemple être réalisé via un navigateur Internet ou via une application native du terminal UE.

Dans le mode de réalisation décrit ici, le chiffrement de la commande est réalisé à l'aide d'un module cryptographique situé sur le terminal UE. C'est par exemple ce module qui a permis la génération de la paire de clefs cryptographiques {KEYA_PUB (clef publique), KEYA_PRIV (clef privée)} pour Alice.

Dans un autre mode de réalisation, le chiffrement de la commande peut être délégué à une carte à puce (SIM/eSIM/iSIM/etc.) insérée dans le terminal UE ou à tout autre terminal disposant d'un module cryptographique et apte à communiquer avec le terminal UE. La requête est ensuite reçue par le dispositif DD à l'étape E20. A l'étape E21, le dispositif DD envoie à destination de la chaîne de blocs BC une requête comprenant un identifiant d'Alice (A_ID) afin de récupérer la clef publique d'Alice (KEYA_PUB) préalablement enregistrée dans la chaîne de blocs BC. A l'étape E31, la chaîne de blocs BC reçoit la requête et envoie (E32) au dispositif DD la clef publique d'Alice KEYA_PUB. A l'étape E22, le dispositif reçoit la clef KEYA_PUB puis essaye de déchiffrer la commande CMD_C avec la clef KEYA_PUB. Si la commande CMD_C est correctement déchiffrée, alors le dispositif DD envoie une demande d'exécution de la commande déchiffrée (CMD) à destination de la chaîne de blocs BC (E23). La commande déchiffrée (CMD) est ensuite reçue puis exécutée par la chaîne de blocs (E33). A l'étape E24, le dispositif DD peut envoyer au terminal UE une requête contenant le statut de l'exécution (STATUS) de la demande reçue en E20. Le statut peut par exemple comprendre un code indiquant le résultat de l'étape de déchiffrement (E23) mais également toute autre information liée à l'exécution de la demande par le dispositif DD et/ou lié à l'exécution de la commande (CMD) par la chaîne de blocs (BC), telle que la date d'exécution de la commande (CMD) par la chaîne de blocs, la durée d'exécution de la commande (CMD), la date d'émission et de réception des requêtes émises et reçues par le dispositif DD, etc.

A noter que les informations liées aux opérations réalisées par la chaîne de blocs BC peuvent être récupérées par le dispositif DD auprès de la chaîne de blocs BC, en réponse à la requête émise lors de l'étape E23 ou en réponse à une requête dédiée (non représentée).

Selon un mode particulier de réalisation de l'invention, à l'étape E23, le procédé peut envoyer plusieurs demandes d'exécution de commandes déchiffrées à destination de la chaîne de blocs BC. C'est par exemple le cas lorsque le procédé reçoit plusieurs requêtes d'exécution en provenance du terminal UE.

Selon un mode particulier de réalisation de l'invention, la clef de déchiffrement d'Alice (i.e la clef publique d'Alice KEYA_PUB) peut être un ensemble de plusieurs clefs de déchiffrement. Chaque clef pouvant être utilisée pour déchiffrer tout ou partie de la commande d'exécution chiffrée selon un ordre prédéfini ou non.

Selon un mode particulier de réalisation de l'invention, La chaîne de blocs permettant d'obtenir la ou les clefs de déchiffrement d'Alice peut être différente de la chaîne de blocs qui exécute la commande d'exécution.

Selon un mode particulier de réalisation de l'invention, le procédé peut comprendre une étape de publication (non représentée) au sein de la chaîne de blocs, lors de l'étape E23 ou ultérieurement. Concrètement le procédé publie au sein de la chaîne de blocs la commande d'exécution déchiffrée et/ou chiffrée et l'identifiant de l'utilisateur. Les données publiées peuvent également comprendre les données STATUS. A noter que cette publication peut se faire au sein d'une deuxième chaîne de blocs dédiée à l'horodatage et à l'enregistrement des commandes d'exécution soumises et/ou des identités associées.

Selon un mode particulier de réalisation de l'invention, l'étape E20 est précédée d'une étape d'authentification d'Alice par le dispositif DD. Cette authentification peut par exemple se faire via un couple identifiant / mot de passe, un « cookie de session » ou tout autre moyen permettant au dispositif DD de s'assurer que la requête d'exécution est bien envoyée par Alice.

Selon un mode particulier de réalisation de l'invention, la commande d'exécution est une commande de révocation d'une ou de plusieurs clefs de déchiffrement d'Alice stockées dans la chaîne de blocs. Ainsi, ce mode de mise en œuvre permet de révoquer les droits d'Alice à utiliser la chaîne de blocs via la révocation de sa ou ses clefs de déchiffrement présentes dans la chaîne de blocs. Cette révocation est réalisée via l'ajout dans la chaîne de blocs d'une information de validité associée à la clef de déchiffrement d'Alice. Cette information de validité peut être un booléen, un caractère ou une chaine de caractères, une date, ou tout autre information permettant de déterminer la validité de la clef de déchiffrement de l'utilisateur à un instant donnée. A noter que la ou les clefs de déchiffrement peuvent être associées par défaut à une information de validité ayant une valeur prédéfinie. Par exemple, lors de l'inscription préalable d'Alice au sein de la chaîne de blocs, la clef publique KEYA_PUB d'Alice peut être par défaut associée à une information de validité indiquant que la clef KEYA _PUB est valide sans limite de temps. A l'inverse, l'information de validité associée par défaut à la clef publique KEYA_PUB d'Alice peut indiquer que la clef KEYA_PUB est invalide. Dans ce cas-là, une étape d'activation de la clef KEYA_PUB sera nécessaire pour qu'Alice puisse utiliser la chaîne de blocs via le dispositif DD. Concrètement, le procédé va émettre, à destination de la chaîne de blocs BC, une requête de modification de l'information de validité associée à la clef KEYA _PUB d'Alice pour que la clef KEYA _PUB devienne valide, c'est-à-dire active. Bien entendu, la requête de modification/activation comprend au moins un identifiant d'Alice (A_ID) et potentiellement une donnée d'identification d'une ou plusieurs clefs d'Alice, comme par exemple un numéro, un caractère, une chaîne de caractères, une adresse, etc. A noter que cette requête peut intervenir avant l'étape E20, lorsque par exemple un utilisateur du dispositif DD souhaite attribuer à Alice le droit d'utiliser la chaîne de blocs BC ou à l'étape E20 après réception d'une requête d'exécution en provenance du terminal UE d'Alice comprenant une commande d'exécution chiffrée (CMD_C) et un identifiant d'Alice. Pour ce dernier cas, l'exécution de la requête de modification/activation peut également être conditionnée à une validation d'un utilisateur via une interface homme-machine du dispositif DD ou à la valeur d'une donnée utilisateur (un caractère ou une chaîne de caractères, une date, un booléen, etc.) obtenue par exemple depuis une base de données. En effet, le dispositif DD peut par exemple consulter le profil utilisateur d'Alice avant d'émettre à destination de la chaîne de blocs BC, une requête de modification de l'information de validité associée à la clef KEYA_PUB d'Alice.

Selon un mode particulier de réalisation de l'invention, la commande d'exécution est une commande de déploiement d'un contrat intelligent au sein de ladite au moins une première chaîne de blocs.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de délégation d'accès à au moins une première chaîne de blocs (BC), mis en œuvre par un dispositif de délégation d'accès (DD), le procédé étant **caractérisé en ce qu'**il comprend :
- une étape de réception (E20), d'une requête d'exécution en provenance d'un terminal (UE), ladite requête comprenant au moins un identifiant d'un utilisateur (A_ID) et au moins une commande d'exécution (CMD_C) d'une action au sein de ladite au moins une première chaîne de blocs, ladite commande étant chiffrée via au moins une clef de chiffrement appartenant audit utilisateur ;
- une étape d'obtention (E21), en fonction dudit au moins un identifiant (A_ID) dudit utilisateur reçu, d'au moins une clef de déchiffrement (KEYA_PUB) dudit utilisateur permettant le déchiffrement de ladite commande d'exécution (CMD_C) ;
- une étape de déchiffrement (E22) de ladite commande d'exécution (CMD_C) ;
- une étape d'émission (E23), à destination de ladite au moins une première chaîne de blocs (BC), d'une demande d'exécution de ladite commande d'exécution déchiffrée (CMD) via ladite au moins une clef de déchiffrement (KEYA_PUB).

2. Procédé de délégation d'accès selon la revendication 1, dans lequel ladite au moins une clef de déchiffrement (KEYA_PUB) dudit utilisateur est obtenue depuis au moins une deuxième chaîne de blocs.

3. Procédé de délégation d'accès selon la revendication 2, dans lequel ladite au moins une première chaîne de blocs (BC) correspond à ladite au moins une seconde chaîne de blocs.

4. Procédé de délégation d'accès selon la revendication 1, dans lequel l'étape de réception (E20) est précédée d'une étape d'authentification dudit utilisateur.

5. Procédé de délégation d'accès selon la revendication 1, dans lequel l'étape d'émission (E23) est précédée d'une étape de publication dans ladite au moins une première chaîne de blocs (BC) dudit au moins un identifiant dudit utilisateur (A_ID) et de ladite commande d'exécution déchiffrée (CMD) et/ou de ladite commande d'exécution chiffrée(CMD_C).

6. Procédé de délégation d'accès selon la revendication 3, dans lequel la commande d'exécution déchiffrée (CMD) est une commande de révocation de ladite au moins une clef de déchiffrement de ladite au moins une deuxième chaîne de blocs.

7. Procédé de délégation d'accès selon la revendication 1, dans lequel la commande d'exécution déchiffrée (CMD) est une commande de déploiement d'un contrat intelligent au sein de ladite au moins une première chaîne de blocs.

8. Procédé de délégation d'accès selon la revendication 1, dans lequel la commande d'exécution déchiffrée (CMD) est une commande d'exécution d'un contrat intelligent stocké dans ladite chaîne de blocs.

9. Dispositif de délégation d'accès (DD) à au moins une première chaîne de blocs (BC) **caractérisé en ce qu'**il comprend :
- un module de réception (RECV), d'une requête d'exécution en provenance d'un terminal (UE), ladite requête comprenant au moins un identifiant d'un utilisateur (A_ID) et au moins une commande d'exécution (CMD_C) d'une action au sein de ladite au moins une première chaîne de blocs, ladite commande étant chiffrée via au moins une clef de chiffrement appartenant audit utilisateur ;
- un module d'obtention (OBT), en fonction dudit au moins un identifiant (A_ID) dudit utilisateur reçu, d'au moins une clef de déchiffrement (KEYA_PUB) dudit utilisateur permettant le déchiffrement de ladite commande d'exécution (CMD_C) ;
- un module de déchiffrement (DECRYPT) de ladite commande d'exécution (CMD_C) ;
- un module d'émission (SND), à destination de ladite au moins une première chaîne de blocs (BC), d'une demande d'exécution de ladite commande d'exécution déchiffrée (CMD) via ladite au moins une clef de déchiffrement (KEYA_PUB).

10. Programme d'ordinateur comportant des instructions pour la mise en œuvre du procédé selon l'une quelconque des revendications 1 à 8, lorsque le programme est exécuté par un processeur.

## Patentansprüche

1. Verfahren zur Delegierung des Zugriffs auf mindestens eine erste Blockchain (BC), das von einer Vorrichtung zur Delegierung des Zugriffs (DD) ausgeführt wird, wobei das Verfahren **dadurch gekennzeichnet ist, dass** es umfasst:
- einen Schritt des Empfangens (E20) einer Ausführungsanforderung von einem Endgerät (UE), wobei die Anforderung mindestens eine Kennung eines Benutzers (A_ID) und mindestens einen Ausführungsbefehl (CMD_C) zum Ausführen einer Aktion in der mindestens einen ersten Blockchain umfasst, wobei der Befehl über mindestens einen Verschlüsselungsschlüssel verschlüsselt ist, der dem Benutzer gehört;
- einen Schritt des Erhaltens (E21), in Abhängigkeit von der empfangenen mindestens einen Kennung (A_ID) des Benutzers, mindestens eines Entschlüsselungsschlüssels (KEYA_PUB) des Benutzers, der das Entschlüsseln des Ausführungsbefehls (CMD_C) ermöglicht;
- einen Schritt des Entschlüsselns (E22) des Ausführungsbefehls (CMD_C);
- einen Schritt des Sendens (E23), an die mindestens eine erste Blockchain (BC), eines Aufforderung zum Ausführen des über den mindestens einen Entschlüsselungsschlüssel (KEYA_PUB) entschlüsselten Ausführungsbefehls (CMD).

2. Verfahren zur Delegierung von Zugriffen nach Anspruch 1, wobei der mindestens eine Entschlüsselungsschlüssel (KEYA_PUB) des Benutzers von mindestens einer zweiten Blockchain aus erhalten wird.

3. Verfahren zur Delegierung von Zugriffen nach Anspruch 2, wobei die mindestens eine erste Blockchain (BC) der mindestens einen zweiten Blockchain entspricht.

4. Verfahren zur Delegierung von Zugriffen nach Anspruch 1, wobei dem Schritt des Empfangens (E20) ein Schritt des Authentifizierens des Benutzers vorausgeht.

5. Verfahren zur Delegierung von Zugriffen nach Anspruch 1, wobei dem Schritt des Sendens (E23) ein Schritt des Veröffentlichens der mindestens einen Kennung des Benutzers (A_ID) und des entschlüsselten Ausführungsbefehls (CMD) und/oder des verschlüsselten Ausführungsbefehls (CMD_C) in der mindestens einen ersten Blockchain (BC) vorausgeht.

6. Verfahren zur Delegierung von Zugriffen nach Anspruch 3, wobei der entschlüsselte Ausführungsbefehl (CMD) ein Befehl zum Widerrufen des mindestens einen Entschlüsselungsschlüssels der mindestens einen zweiten Blockchain ist.

7. Verfahren zur Delegierung von Zugriffen nach Anspruch 1, wobei der entschlüsselte Ausführungsbefehl (CMD) ein Befehl zum Implementieren eines intelligenten Vertrags in die mindestens eine erste Blockchain ist.

8. Verfahren zur Delegierung von Zugriffen nach Anspruch 1, wobei der entschlüsselte Ausführungsbefehl (CMD) ein Befehl zum Ausführen eines intelligenten Vertrags ist, der in der Blockchain gespeichert ist.

9. Vorrichtung zur Delegierung des Zugriffs (DD) auf mindestens eine erste Blockchain (BC), **dadurch gekennzeichnet, dass** sie umfasst:
- ein Modul zum Empfangen (RECV) einer Ausführungsanforderung von einem Endgerät (UE), wobei die Anforderung mindestens eine Kennung eines Benutzers (A_ID) und mindestens einen Ausführungsbefehl (CMD_C) zum Ausführen einer Aktion in der mindestens einen ersten Blockchain umfasst, wobei der Befehl über mindestens einen Verschlüsselungsschlüssel verschlüsselt ist, der dem Benutzer gehört;
- ein Modul zum Erhalten (OBT), in Abhängigkeit von der empfangenen mindestens einen Kennung (A_ID) des Benutzers, mindestens eines Entschlüsselungsschlüssels (KEYA_PUB) des Benutzers, der das Entschlüsseln des Ausführungsbefehls (CMD_C) ermöglicht;
- ein Modul zum Entschlüsseln (DECRYPT) des Ausführungsbefehls (CMD_C);
- ein Modul zum Senden (SND), an die mindestens eine erste Blockchain (BC), eines Aufforderung zum Ausführen des über den mindestens einen Entschlüsselungsschlüssel (KEYA_PUB) entschlüsselten Ausführungsbefehls (CMD).

10. Computerprogramm mit Anweisungen, die bei der Ausführung des Programms durch einen Prozessor das Verfahren nach einem der Ansprüche 1 bis 8 ausführen.

## Claims

1. Method for delegating access to at least one first blockchain (BC), implemented by an access delegation device (DD), the method being **characterized in that** it comprises:
- a step (E20) of receiving an execution request from a terminal (UE), said request comprising at least one identifier of a user (A_ID) and at least one execution command (CMD_C) to execute an action within said at least one first blockchain, said command being encrypted via at least one encryption key belonging to said user;
- a step (E21) of obtaining, on the basis of said at least one received identifier (A_ID) of said user, at least one decryption key (KEYA_PUB) of said user allowing said execution command (CMD_C) to be decrypted;
- a step (E22) of decrypting said execution command (CMD_C) ;
- a step (E23) of transmitting, to said at least one first blockchain (BC), an execution request to execute said execution command (CMD) decrypted via said at least one decryption key (KEYA_PUB).

2. Access delegation method according to Claim 1, wherein said at least one decryption key (KEYA_PUB) of said user is obtained from at least one second blockchain.

3. Access delegation method according to Claim 2, wherein said at least one first blockchain (BC) corresponds to said at least one second blockchain.

4. Access delegation method according to Claim 1, wherein the reception step (E20) is preceded by a step of authenticating said user.

5. Access delegation method according to Claim 1, wherein the transmission step (E23) is preceded by a step of publishing, in said at least one first blockchain (BC), said at least one identifier of said user (A_ID) and said decrypted execution command (CMD) and/or said encrypted execution command (CMD_C).

6. Access delegation method according to Claim 3, wherein the decrypted execution command (CMD) is a command to revoke said at least one decryption key of said at least one second blockchain.

7. Access delegation method according to Claim 1, wherein the decrypted execution command (CMD) is a command to deploy a smart contract within said at least one first blockchain.

8. Access delegation method according to Claim 1, wherein the decrypted execution command (CMD) is a command to execute a smart contract stored in said blockchain.

9. Device (DD) for delegating access to at least one first blockchain (BC), **characterized in that** it comprises:
- a module (RECV) for receiving an execution request from a terminal (UE), said request comprising at least one identifier of a user (A_ID) and at least one execution command (CMD_C) to execute an action within said at least one first blockchain, said command being encrypted via at least one encryption key belonging to said user;
- a module (OBT) for obtaining, on the basis of said at least one received identifier (A_ID) of said user, at least one decryption key (KEYA_PUB) of said user allowing said execution command (CMD_C) to be decrypted;
- a module (DECRYPT) for decrypting said execution command (CMD_C);
- a module (SND) for transmitting, to said at least one first blockchain (BC), an execution request to execute said execution command (CMD) decrypted via said at least one decryption key (KEYA_PUB).

10. Computer program comprising instructions for implementing the method according to any one of Claims 1 to 8 when the program is executed by a processor.
